# EUROPÄISCHE PATENTSCHRIFT

(11) **EP 2 044 593 B1**
(45) Veröffentlichungstag und Bekanntmachung des Hinweises auf die Patenterteilung: **26.03.2014**
(21) Anmeldenummer: 07786117.7
(22) Anmeldetag: 17.07.2007
(51) Int. Cl.: G21C 3/322, G21C 3/32

(54) **EINRICHTUNG ZUM ENTFERNEN VON FESTSTOFFPARTIKELN AUS DEM IM PRIMÄRKREIS EINES KERNREAKTORS UMGEWÄLZTEN KÜHLMEDIUM**
DEVICE FOR REMOVING SOLID PARTICLES FROM THE COOLING MEDIUM CIRCULATED IN THE PRIMARY CIRCUIT OF A NUCLEAR REACTOR
DISPOSITIF POUR ENLEVER DES PARTICULES SOLIDES DU FLUIDE DE REFROIDISSEMENT CIRCULANT DANS LE CIRCUIT PRIMAIRE D'UN RÉACTEUR NUCLÉAIRE

(30) Priorität: 22.07.2006 DE 102006034001; 17.08.2006 DE 102006038748
(43) Veröffentlichungstag der Anmeldung: 08.04.2009
(73) Patentinhaber: AREVA GmbH, 91052 Erlangen (DE)
(72) Erfinder: LELICKENS, Hartmut, 91369 Wiesenthau (DE); HUQ, Reazul, 63067 Offenbach/M (DE); MEIER, Werner, 91358 Kunreuth (DE); HEINECKE, Jochen, 51515 Kürten (DE)
(74) Vertreter: Meissner, Bolte & Partner
(86) Internationale Anmeldenummer: PCT/EP2007/006317
(87) Internationale Veröffentlichungsnummer: WO 2008/012008

(56) Entgegenhaltungen:
- EP-A- 0 213 813
- EP-A- 0 432 738
- WO-A-02/075746
- DE-A1- 4 326 356
- JP-A- 5 072 376
- JP-A- 56 117 194
- US-A- 5 390 221

## Beschreibung

Die Erfindung bezieht sich auf eine Einrichtung zum Entfernen von Feststoffpartikeln aus dem im Primärkreis eines Kernreaktors, insbesondere im Primärkreis eines Siedewasserkernreaktors umgewälzten Kühlmedium. Die Erfindung bezieht sich außerdem auf einen Reaktorkern eines Kernreaktors mit einer solchen Einrichtung.

Durch Servicearbeiten im Primärkreis eines Kernreaktors kann es vorkommen, dass Fremdkörper in Gestalt kleiner Feststoffpartikel in den Primärkreislauf gelangen und mit dem Kühlmedium ständig umgewälzt werden. Diese Feststoffpartikel lagern sich in Totbereichen der Strömung und in Spalten ab, und können bei Demontagevorgängen im Rahmen von Wartungsarbeiten zu einem Klemmen oder zu einer Schwergängigkeit der zu demontierenden Teile führen. Darüber hinaus können diese Feststoffpartikel zu einer verstärkten Erosion in engen, vom Kühlmedium durchströmten Spalten führen.

Aus der EP 0 432 738 B1 ist es zum Vermeiden von durch Fremdkörper verursachten Erosions- oder Abriebschäden an Brennstäben eines Brennelementes für einen Siedewasserreaktor bekannt, unterhalb der Fußplatte des Brennelementes einen Schmutzfänger in Form einer Siebplatte oder eines trichterförmigen Siebes anzuordnen, der das Eindringen von Fremdkörpern in das Brennelement verhindert. Bei der Ausführungsform mit dem trichterförmigen, im Zentrum einen freien Kanal aufweisenden Sieb sind diesem Leitschaufeln vorgeschaltet, die eine Drallströmung erzeugen und verhindern, dass Fremdpartikel in den zentralen freien Kanal einströmen.

Mit einer solchen Siebplatte oder einem solchen trichterförmigen Sieb ist es zwar möglich, das Eindringen von Fremdpartikeln in die Zwischenräume zwischen den Brennstäben zu vermeiden. Ein Problem ist jedoch, dass ein solcher Schmutzfänger partiell verstopfen kann und die Strömungsverhältnisse im Brennelement ungünstig beeinflusst. Um Probleme mit Fremdpartikeln von vornherein zu vermeiden, ist es deshalb grundsätzlich angestrebt, das Kühlmedium in Filteranlagen zu reinigen, um auf diese Weise die Menge solcher im Kühlmedium mitgeführten Fremdstoffpartikel von vornherein zu verringern.

Dabei hat sich herausgestellt, dass die in Kernkraftwerken üblicherweise zur Reinigung des Kühlmittels vorhandenen Filteranlagen nicht ausreichen, um diese Feststoffpartikel aus dem Kühlmittelkreislauf zu entfernen, da beobachtet werden konnte, dass sich auch nach der Durchführung einer solchen Reinigung erneut Feststoffpartikel an den vorstehend erwähnten Stellen ansammeln.

Aus der JP 56117194 A ist es bekannt, in den Reaktorkern anstelle eines Brennelementes eine Filtereinrichtung einzusetzen, die dieselbe äußere Form wie ein Brennelement aufweist, um auf diese Weise während des Betriebes des Reaktors Fremdpartikel aus dem Kühlmittelkreislauf zu entfernen.

Der Erfindung liegt nun die Aufgabe zu Grunde, eine Einrichtung anzugeben, mit der es möglich ist, Feststoffpartikel aus dem im Primärkreis eines Kernreaktors, insbesondere eines Siedewasserkernreaktors, umgewälzten Kühlmedium auf einfache Weise sicher zu entfernen.

Die genannte Aufgabe wird gemäß der Erfindung gelöst mit einer Einrichtung mit dem Merkmalen des Patentanspruches 1. Gemäß diesen Merkmalen ist die Einrichtung hinsichtlich ihrer geometrischen Abmessungen und Formen derart gestaltet, dass sie wie ein für diesen Kernreaktor konfiguriertes Brennelement und an Stelle eines solchen Brennelementes in eine leere Brennelementposition des Reaktorkerns des Kernreaktors einsetzbar ist und eine sich in eine Längsrichtung erstreckende Tragstruktur umfasst, in der zumindest ein Abscheider angeordnet ist. Durch diese Maßnahme wird eine Filter- oder Reinigungseinrichtung zur Verfügung gestellt, die während der gesamten Dauer des Normalbetriebes des Kernreaktors wirksam ist, und durch diese lange Einsatzzeit sukzessive und effektiv die Feststoffpartikel aus dem umgewälzten Kühlmedium eliminiert, d.h. aus dem Kühlmittelstrom separiert, indem sich diese während des Betriebes des Kernkraftwerkes innerhalb der Einrichtung ablagern. Die Einrichtung kann dann im Rahmen von üblichen Service- und Wartungsarbeiten, beispielsweise am Ende eines Betriebszyklus wie ein Brennelement aus dem Reaktorkern entnommen und gereinigt werden. Nachdem die in ihr abgelagerten Feststoffpartikel entfernt sind, kann die Einrichtung erneut in die selbe oder in eine andere leere Brennelementposition eingesetzt werden, um nach Anfahren des Kernreaktors erneut ihren Betrieb aufzunehmen. Alternativ hierzu ist es auch möglich die komplette Einrichtung, wenn sie beispielsweise mehrere Betriebszyklen im Einsatz war, wie ein abgebranntes Brennelement zu entsorgen.

Als Abscheider sind Strömungsabscheider vorgesehen, bei denen eine Trennung von Kühlmedium und Feststoffpartikel durch die Wirkung der Schwerkraft oder einer Fliehkraft herbeigeführt ist. Durch die Verwendung eines Strömungsabscheiders sind konstruktive Gestaltungen möglich, die bei hinreichender Abscheidewirkung einen niedrigen Strömungswiderstand haben.

Vorzugsweise sind in der Tragstruktur eine Mehrzahl von in Längsrichtung hintereinander angeordneten Abscheidern angeordnet.

Bei der Tragstruktur handelt es sich insbesondere um einen hohlen Kasten. Eine derartige Einrichtung ist insbesondere für den Einsatz in einem Siedewasserkernreaktor geeignet.

In einer besonders bevorzugten Ausgestaltung der Erfindung ist als Abscheider ein mit einer Einlassöffnung für das Kühlmittel versehener, in die Tragstruktur einsetzbarer Einsatz vorgesehen, der gegenüber und beabstandet zu dieser Einlassöffnung eine Ablenkeinrichtung zum Ablenken des Kühlmittels aufweist, und der mit einer Lagerzone zum Aufnehmen der durch die Fliehkraft beim Ablenken abgeschiedenen Feststoffpartikel versehen ist. Ein solcher Abscheider ist konstruktiv einfach aufgebaut und lässt sich mit geringem technischen Aufwand herstellen und flexibel an die jeweiligen, kraftwerksspezifischen Anforderungen anpassen.

Wenn als Ablenkeinrichtung ein Zyklon, insbesondere in Form eines feststehenden Schaufelblattes, vorgesehen ist der dem in Längsrichtung innerhalb der Tragstruktur strömenden Kühlmedium einen Drall um diese Längsrichtung aufprägt, wird ein hoher Abscheidegrad bei geringem Strömungswiderstand und geringer Neigung zu strömungsinduzierten Schwingungen erzielt.

In einer weiteren bevorzugten Ausführungsform sind mehrere Abscheider in Längsrichtung hintereinander angeordnet und lösbar miteinander verbunden sind. Ein auf diese Weise gebildeter Stapel kann besonders einfach in seiner Gesamtheit in die Tragstruktur eingebaut oder aus dieser ausgebaut werden.

Wenn mehrere Abscheider in Längsrichtung hintereinander angeordnet sind, die zum Erzielen einer unterschiedlichen Abscheidewirkung konstruktiv voneinander verschieden sind, können Feststoffpartikel, die sich geometrisch und physikalisch voneinander unterscheiden mit einem hohen Wirkungsgrad in einer einzigen Einrichtung aus dem Kühlmedium abgeschieden werden.

Wenn der Strömungswiderstand der Einrichtung zumindest annährend dem Strömungswiderstand eines Brennelementes entspricht, werden die hydraulischen Bedingungen in der Umgebung der Einrichtung gegenüber einem Betrieb mit eingesetztem Brennelement allenfalls in einem vertretbaren Ausmaß beeinflusst.

Bei einem Reaktorkern eines Kernreaktors, bei dem eine Einrichtung gemäß der Erfindung in eine leere Brennelementposition eingesetzt ist, befindet sich diese vorzugsweise am Rand, insbesondere in einer Eckposition, da die in diesen Positionen befindlichen Brennelemente die geringste Leistung zum Kern haben und somit die Gesamtleistung des Kerns am geringsten verringert wird, wenn ein solches Brennelement durch die erfindungsgemäße Einrichtung ersetzt wird.

Zur weiteren Erläuterung der Erfindung wird auf das Ausführungsbeispiel der Zeichnung verwiesen. Es zeigen:
- Figur 1: eine Einrichtung gemäß der Erfindung in einer schematischen Ansicht seiner Längsseite mit einer Mehrzahl von hintereinander angeordneten Abscheidern,
- Figur 2: eine vergrößerte schematische Darstellung der Einrichtung in einem ihrer Endbereiche,
- Figur 3: eine alternative Ausgestaltung der Erfindung mit Abscheidern, die als Zyklon gestaltet sind,
- Figur 4: einen Abscheider im ausgebauten Zustand in einer Seitenansicht und einer Draufsicht von unten (in Strömungsrichtung),
- Figur 5: eine vergrößerte Teildarstellung der in Fig. 3 gezeigten Einrichtung,
- Figur 6: einen Ausschnitt auf die Gitterstruktur eines Reaktorkerns in seinem Randbereich mit bevorzugten Positionen zum Einsetzen der erfindungsgemäßen Einrichtung.

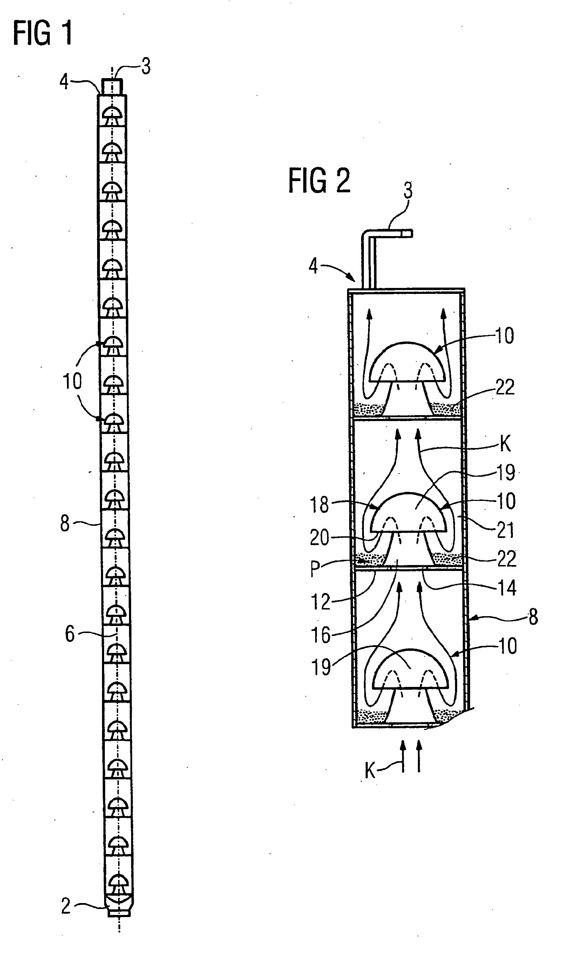

Gemäß Figur 1 enthält eine für den Einsatz im Reaktorkern eines Siedewasserreaktors vorgesehene Einrichtung gemäß der Erfindung ein Fußstück 2 und ein mit einem Griff 3 versehenes Kopfstück 4, die hinsichtlich ihrer Abmessung und Form derart gestaltet sind, dass die Einrichtung wie ein für diesen Kernreaktor konfiguriertes Brennelement zwischen einem oberen Kerngitter und einem unteren Kerngitter an Stelle eines solchen Brennelementes in eine leere Brennelementposition des Reaktorkerns eingesetzt werden kann. Fußstück 2 und Kopfstütze 4 sind miteinander durch eine sich in einer Längsrichtung 6 erstreckende Tragstruktur 8 verbunden, im Beispiel ein Kasten, der die Außenabmessungen des Kastens eines für diesen Siedewasserreaktor konfigurierten Brennelementes aufweist. Innerhalb des Kastens (Tragstruktur 8) sind eine Vielzahl von Abscheidern 10 in Längsrichtung 6 hintereinander angeordnet, so dass sie nacheinander von dem durch das Innere der Tragstruktur 8, im Beispiel durch den Kasten strömenden Kühlmedium durchströmt werden.

Figur 2 zeigt das dem Kopfstück 4 mit dem Griff 3 zugewandte obere Ende der Einrichtung in einer vergrößerten Darstellung. Die Abscheider 10 sind in Form eines in den Kasten (Tragstruktur 8) eingesetzten Einsatzes gestaltet und umfassen im Ausführungsbeispiel eine Tragplatte 12, die in ihrem Zentrum eine Einlassöffnung 14 aufweist, die das im Kasten strömende Kühlmittel K in einen Strömungskanal 16 leitet, dessen Querschnitt sich in Richtung der Strömung in Form einer Düse verengt. Am Auslass des Strömungskanals 16 befindet sich eine Ablenkeinrichtung 18, mit der das Kühlmedium K abgelenkt wird. In diesem Ausführungsbeispiel wird die Ablenkeinrichtung 18 durch eine Kalotte 19 gebildet, die das anströmende Kühlmedium um nahezu 180° umlenkt. Zwischen der Kalotte 19 und der Wand des Kastens befindet sich eine kreisringförmige Auslassöffnung 20, aus der das Kühlmedium K austritt, so dass es außerhalb des Strömungskanals 16 entlang seiner Außenwand in Richtung der Tragplatte 12 strömt, die gemeinsam mit der Innenwand des Kastens eine erneute Umlenkung des Kühlmediums K um ebenfalls nahezu 180° bewirkt, so dass dieses nach oben (axial in Richtung des Kopfstückes 4) durch einen zwischen Wand des Kastens und Umlenkeinrichtung 18 gebildeten Auslasskanal 21 zum nächsten Abscheider 10 strömen kann. Der Randbereich der Lagerplatte 12 bildet einen Totraum 22 und damit eine Lagerzone für Feststoffpartikel P, die sich dort auf Grund der durch die untere Umlenkung des Kühlmediums K bewirkten Fliehkraft ablagern.

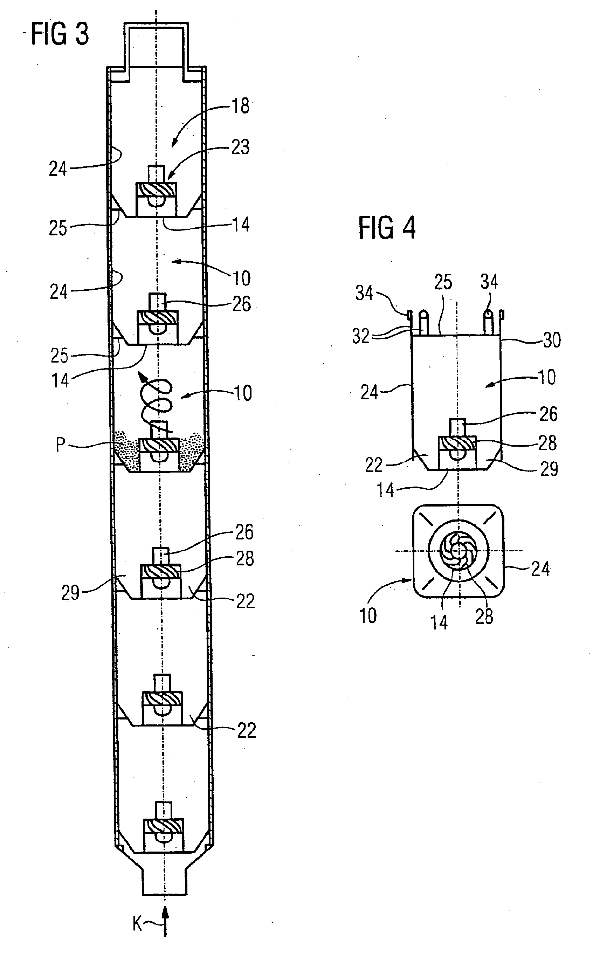

Im Ausführungsbeispiel gemäß Figur 3 sind in den Abscheidern 10 als Ablenkeinrichtungen 18 Zyklone 23 vorgesehen.,Auch in diesem Ausführungsbeispiel sind die Abscheider 10 als einzelne Module oder Einsätze gestaltet, die in den Kasten (die Tragstruktur 8) eingesetzt werden können. Jeder Abscheider 10 weist ein rechteckiges Hohlprofil 24 auf, das an einer seiner Stirnseiten mit der Einlassöffnung 14 versehen ist und an der gegenüberliegenden Stirnseite 25 offen ist. An die Einlassöffnung 14 schließt sich ebenfalls ein kurzer Strömungskanal 16 an. Am in das Hohlprofil 24 mündenden Auslass des mittig angeordneten, d. h. nach dem Einbau in die Tragstruktur mit der Längsrichtung 6 fluchtenden Strömungskanals 16 ist der Zyklon 23 angeordnet, der einen feststehenden Lagerkörper 26 umfasst, der mehrere Schaufeln oder Schaufelblätter 28 aufweist. Die Schaufelblätter 28 sind ebenfalls feststehend am Lagerkörper 26 fixiert und prägen dem in Längsrichtung 6 strömenden Kühlmedium K einen Drall um diese Längsrichtung 6 (einen Drehimpuls parallel zu dieser Längsrichtung 6) auf und erzeugen somit eine Bewegung des Kühlmediums K auf einer schraubenförmigen Bahn um diese Längsrichtung 6. Durch diesen Drall wird auf die aus dem Strömungskanal 16 ausströmenden Feststoffpartikel 22 eine nach außen gerichtete Kraft (Zentrifugalkraft) ausgeübt, die diese nach außen zur Innenwand des Hohlprofils 24 in strömungsberuhigte Zonen befördert, wo sie aufgrund der Wirkung des Schwerkraft in einen den Strömungskanal 16 umgebenden Totraum 22 absinken, der zugleich als Sammelraum dient.

In Figur 4 ist zu erkennen, dass das (im eingebauten Zustand während des Betriebs) oben offene Hohlprofil 24 an seinem der Einlassöffnung 14 gegenüberliegenden stirnseitigen (oberen) Rand 30 mit einer Mehrzahl von sich in Längsrichtung 6 erstreckenden Federzungen 32 versehen ist, an deren Freienden radial nach außen weisende Noppen 34 angeordnet sind.

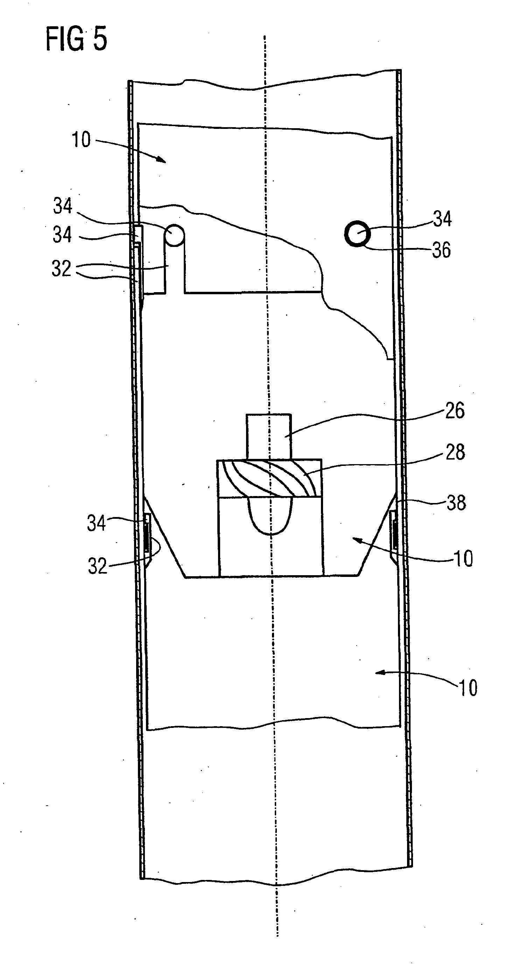

Diese Noppen greifen gemäß Fig. 5 in Öffnungen 36 des benachbarten darüber liegenden und am oberen Rand 30 aufliegenden Abscheiders 10 ein und bilden eine Schnapp- oder Rastverbindung, so dass die in einem Stapel angeordneten Abscheider 10 untereinander formschlüssig verbunden sind und gemeinsam als Stapel aus der Tragstruktur 8 ausgehoben werden können. Die Schnappverbindung kann außerdem mit einem Werkzeug entriegelt werden, um die Einsätze auch einzeln entnehmen zu können.

Im Bereich der Einlassöffnung 14 ist das Hohlprofil 24 ähnlich einem Pyramidenstumpf geformt, so dass es, wenn es mit einem an der Basis des Pyramidenstumpfes befindlichen umlaufenden Kragen 38 (sieh auch Fig. 4) am oberen Rand des Hohlprofils 24 des (im eingebauten Zustand) darunter liegenden Abscheiders 10 aufliegt, in diesen mit seiner Einlassöffnung 14 hinein ragt.

In den in Fig. 1-5 dargestellten Ausführungsbeispielen sind die Abscheider als Strömungsabscheider gestaltet, die eine Ablenkeinrichtung aufweisen, die eine Änderung der Strömungsrichtung des Kühlmediums - eine Ablenkung - bewirken, und bei denen die Feststoffpartikel durch auf sie wirkende Flieh- oder Zentrifugalkräfte in strömungsberuhigte Zonen getrieben werden, wo sie vom Kühlmedium nicht mehr mitgenommen werden und sich in als Lagerraum vorgesehene Totzonen ansammeln.

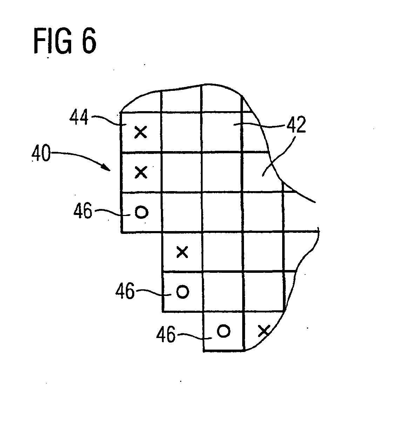

Figur 6 zeigt einen Ausschnitt aus dem Randbereich eines Reaktorkerns 40, dessen Zellen 42 jeweils mit einem Brennelement besetzt sind. In der Figur sind nun durch "x" und "o" Brennelementpositionen 44,46 am Rand des Reaktorkerns identifiziert, die für den Einsatz einer Einrichtung gemäß der Erfindung besonders geeignet sind. Dabei handelt es sich vorzugsweise um Eckpositionen 46, an denen die Einrichtung nur mit zwei Seitenkanten an ein benachbartes Brennelement grenzt. Ein in dieser Weise mit einem oder mehreren solcher Einrichtungen bestückter Reaktorkern 40 gewährleistet eine sichere und dauerhafte Entfernung von Feststoffpartikeln aus dem Primärkreis.

**Bezugszeichenliste**

| | | | |
|---|---|---|---|
| | | K | Kühlmedium |
| 2 | Fußstück | P | Feststoffpartikel |
| 3 | Griff | | |
| 4 | Kopfstück | | |
| 6 | Längsrichtung | | |
| 8 | Tragstruktur | | |
| 10 | Abscheider | | |
| 12 | Tragplatte | | |
| 14 | Einlassöffnung | | |
| 16 | Strömungskanal | | |
| 18 | Umlenkeinrichtung | | |
| 19 | Kalotte | | |
| 20 | Auslassöffnung | | |
| 21 | Auslasskanal | | |
| 22 | Totraum | | |
| 23 | Zyklon | | |
| 24 | Hohlprofil | | |
| 25 | Stirnseite | | |
| 26 | Lagerkörper | | |
| 28 | Schaufelblatt | | |
| 29 | Totraum | | |
| 30 | Rand | | |
| 32 | Federzunge | | |
| 34 | Noppe | | |
| 36 | Öffnung | | |
| 38 | Kragen | | |
| 40 | Reaktorkern | | |
| 42 | Zelle | | |
| 44, 46 | Brennelementposition | | |

## Patentansprüche

1. Einrichtung zum Entfernen von Feststoffpartikeln (22) aus dem im Primärkreis eines Kernreaktors, insbesondere eines Siedewasserkernreaktors umgewälzten Kühlmedium (K), die in ihren geometrischen Abmessungen und Formen derart gestaltet ist, dass sie wie ein für diesen Kernreaktor konfiguriertes Brennelement und anstelle eines solchen Brennelementes in eine leere Brennelementposition (44,46) des Reaktorkerns (28) des Kernreaktors einsetzbar ist, und eine sich in eine Längsrichtung (6) erstreckenden Tragstruktur (8) aufweist, in der zumindest ein Abscheider (10) angeordnet ist, **dadurch gekennzeichnet, dass** der Abscheider (10) ein Strömungsabscheider ist, bei dem eine Trennung von Kühlmedium (K) und Feststoffpartikeln (22) durch die Wirkung einer Fliehkraft oder Schwerkraft erfolgt.

2. Einrichtung nach Anspruch 1, bei der in der Tragstruktur (8) eine Mehrzahl von Abscheidern (10) in Längsrichtung (6) hintereinander angeordnet sind.

3. Einrichtung nach Anspruch 2, bei der die Abscheider (10) lösbar miteinander verbunden sind.

4. Einrichtung nach einem der Ansprüche 1 bis 4, bei der als Tragstruktur (8) ein hohler Kasten vorgesehen ist.

5. Einrichtung nach einem der vorhergehenden Ansprüche, bei der als Abscheider (10) ein mit einer Einlassöffnung (14) für das Kühlmedium (K) versehener, in die Tragstruktur einsetzbarer Einsatz vorgesehen, der gegenüber und beabstandet zu dieser Einlassöffnung (14) eine Ablenkeinrichtung (18) zum Ablenken des Kühlmediums (K) aufweist, und der mit einer Lagerzone zum Aufnehmen der durch die Fliehkraft beim Ablenken abgeschiedenen Feststoffpartikel (22) versehen ist.

6. Einrichtung nach Anspruch 5, bei der als Ablenkeinrichtung (18) ein Zyklon (22) vorgesehen ist, der dem in Längsrichtung (6) der Tragstruktur (8) strömenden Kühlmedium (K) einen Drall um diese Längsrichtung (6) aufprägt.

7. Einrichtung nach Anspruch 6, bei der die Ablenkeinrichtung (18) zumindest ein feststehendes Schaufelblatt (28) enthält.

8. Einrichtung nach einem der vorhergehenden Ansprüche, bei der mehrere Abscheider (10) in Längsrichtung (6) hintereinander angeordnet sind, die zum Erzielen einer unterschiedlichen Abscheidewirkung konstruktiv voneinander verschieden sind.

9. Einrichtung nach einem der vorhergehenden Ansprüche, deren Strömungswiderstand zumindest annähernd dem Strömungswiderstand eines Brennelementes entspricht.

10. Reaktorkern (40) eines Kernreaktors, insbesondere eines Siedewasserkernreaktors, mit einer in ihm in eine leere Brennelementposition (44,46) eingesetzten Einrichtung nach einem der vorhergehenden Ansprüche.

11. Reaktorkern nach Anspruch 10, bei dem die Einrichtung in eine am Rand befindliche Brennelementposition (44,46) eingesetzt ist.

12. Reaktorkern nach Anspruch 10 oder 11, bei dem die Einrichtung in einer Eckposition (46) eingesetzt ist.

## Claims

1. Equipment for removing solid particles (22) from the coolant (K) which is circulated in the primary circuit of a nuclear reactor, in particular of a boiling water reactor, said equipment being designed with geometric dimensions and shapes such that it is able to be inserted into an empty fuel element position (44, 46) of the reactor core (28) of the nuclear reactor like a fuel element configured for this nuclear reactor and in place of such a fuel element, and has a support structure (8) extending in the longitudinal direction (6), in which at least one separator (10) is arranged, **characterised in that** the separator (10) is a flow separator, in which a separation of coolant (K) and solid particles (22) occurs through the action of a centrifugal force or a gravitational force.

2. Equipment according to claim 1, in which a plurality of separators (10) are arranged consecutively in the longitudinal direction (6) in the support structure (8).

3. Equipment according to claim 2, in which the separators (10) are releasably connected to one another.

4. Equipment according to one of claims 1 to 4, in which a hollow case is provided as a support structure (8).

5. Equipment according to one of the preceding claims, in which an insert is provided as a separator (10), which is provided with an inlet opening (14) for the coolant (K) and is able to be inserted into the support structure, said insert having a deflection unit (18) for the deflection of the coolant (K) opposite and at a distance from the inlet opening (14), and which is provided with a storage area for the accommodation of the solid particles (22) separated by the centrifugal force during deflection.

6. Equipment according to claim 5, in which a cyclone separator (22) is provided as a deflection unit (18), which causes a swirling movement around the longitudinal direction (6) in the coolant (K) flowing in this longitudinal direction (6) of the support structure (8).

7. Equipment according to claim 6, in which the deflecting unit (18) contains at least one fixed blade (28).

8. Equipment according to one of the preceding claims, in which several separators (10) are arranged consecutively in the longitudinal direction (6), which differ from one another in terms of their construction to achieve different separating actions.

9. Equipment according to one of the preceding claims, the flow resistance of which corresponds at least approximately to the flow resistance of a fuel element.

10. Reactor core (40) of a core reactor, in particular of a boiling water core reactor, having equipment inserted into it in an empty fuel element position (44, 46), according to one of the preceding claims.

11. Reactor core according to claim 10, in which the equipment is inserted into a fuel element position (44, 46) situated on the edge.

12. Reactor core according to claim 10 or 11, in which the equipment is inserted into a corner position (46).

## Revendications

1. Dispositif pour enlever des particules solides (22) du fluide de refroidissement (K) circulant dans le circuit primaire d'un réacteur nucléaire, en particulier d'un réacteur nucléaire à eau bouillante, qui est configuré, au niveau de ses dimensions et de ses formes géométriques, d'une manière telle qu'il puisse être utilisé comme un élément combustible configuré pour ce réacteur nucléaire et au lieu d'un tel élément combustible dans un emplacement d'élément combustible vide (44, 46) du coeur de réacteur (28) du réacteur nucléaire, et présente une structure de support (8) s'étendant dans une direction longitudinale (6), dans laquelle au moins un séparateur (10) est disposé, **caractérisé en ce que** le séparateur (10) est un séparateur à écoulement, dans lequel une séparation du fluide de refroidissement (K) et des particules solides (22) est effectuée par l'action d'une force centrifuge ou de la force de gravité.

2. Dispositif selon la revendication 1, dans lequel une pluralité de séparateurs (10) sont disposés l'un derrière l'autre selon la direction longitudinale (6) dans la structure de support (8).

3. Dispositif selon la revendication 2, dans lequel les séparateurs (10) sont reliés les uns aux autres de façon amovible.

4. Dispositif selon l'une quelconque des revendications 1 à 3, dans lequel il est prévu un caisson creux comme structure de support (8).

5. Dispositif selon l'une quelconque des revendications précédentes, dans lequel il est prévu comme séparateur (10) un élément pourvu d'une ouverture d'entrée (14) pour le fluide de refroidissement (K) et pouvant être introduit dans la structure de support, qui présente en face et à distance de cette ouverture d'entrée (14) un dispositif de déviation (18) pour dévier le fluide de refroidissement (K), et qui est pourvu d'une zone de dépôt destinée à recueillir les particules solides (22) séparées par la force centrifuge lors de la déviation.

6. Dispositif selon la revendication 5, dans lequel il est prévu comme dispositif de déviation (18) un cyclone (22), qui imprime un mouvement de rotation autour de la direction longitudinale (6) de la structure de support (8) au fluide de refroidissement (K) circulant dans cette direction longitudinale (6).

7. Dispositif selon la revendication 6, dans lequel le dispositif de déviation (18) contient au moins une pale d'aube immobile (28).

8. Dispositif selon l'une quelconque des revendications précédentes, dans lequel plusieurs séparateurs (10), qui sont par construction différents l'un de l'autre afin de produire un effet de séparation différent, sont disposés l'un derrière l'autre dans la direction longitudinale (6).

9. Dispositif selon l'une quelconque des revendications précédentes, dont la résistance à l'écoulement correspond au moins approximativement à la résistance à l'écoulement d'un élément combustible.

10. Coeur de réacteur (40) d'un réacteur nucléaire, en particulier d'un réacteur nucléaire à eau bouillante, avec un dispositif selon l'une quelconque des revendications précédentes introduit dans celui-ci dans un emplacement vide d'élément combustible (44, 46).

11. Coeur de réacteur selon la revendication 10, dans lequel le dispositif est introduit dans un emplacement d'élément combustible (44, 46) située en périphérie.

12. Coeur de réacteur selon la revendication 10 ou 11, dans lequel le dispositif est introduit dans un emplacement d'angle (46).
